Europäisches Patentamt

European Patent Office

Office européen des brevets

(11) Veröffentlichungsnummer : **0 085 822**
**B1**

(12) # EUROPÄISCHE PATENTSCHRIFT

(45) Veröffentlichungstag der Patentschrift :
02.01.86

(51) Int. Cl.⁴ : **B 65 G   1/02**, **E 01 B 25/28**

(21) Anmeldenummer : **82810047.9**

(22) Anmeldetag : **05.02.82**

(54) Verfahren zum Installieren von Sockelschienen für einen Hubstapler in einem Lagergebäude und Einrichtung zur Durchführung des Verfahrens.

(43) Veröffentlichungstag der Anmeldung :
17.08.83 Patentblatt 83/33

(45) Bekanntmachung des Hinweises auf die Patenterteilung : 02.01.86 Patentblatt 86/01

(84) Benannte Vertragsstaaten :
AT CH DE LI

(56) Entgegenhaltungen :
DE-A- 2 746 249
US-A- 3 552 648

(73) Patentinhaber : **Geilinger AG**
**Werkstrasse 20**
**CH-8401 Winterthur (CH)**

(72) Erfinder : **Zuppinger, Jacques**
**Reutlingerstrasse 42**
**CH-8472 Seuzach (CH)**

(74) Vertreter : Gäbel, Walter Dr.
**Wingertstrasse 17**
**CH-8542 Wiesendangen (CH)**

**Beschreibung**

Die Erfindung betrifft ein Verfahren zum Installieren von Sockelschienen für einen Hubstapler in einem Gestelle für Lagergut enthaltenden Lagergebäude mit einem Rohbetonboden und darauf angebrachtem Hartbetonbelag, welche Sockelschienen Führungselemente, z. B. Rollen, des Hubstaplers mit einem oberen, im wesentlichen horizontalen Schenkel übergreifen und gegen Kippen während der Arbeit sichern. Die Lagergestelle können bis etwa 15 m hoch sein. Zwischen den Gestellen werden Rollbahnen für den Hubstapler gebildet, durch welche das Lagergut eingelagert und wieder herausgeholt werden kann. Die Rollbahnen enthalten den Hartbetonbelag und sind seitlich durch die Sockelschienen begrenzt.

Bei einem bisherigen praktisch bekannt gewordenen und zum Stand der Technik gehörenden Verfahren der genannten Art werden die Sockelschienen z. B. mittels besonderer Schrauben unmittelbar auf dem Rohbetonboden des Gebäudes befestigt und nivelliert. (Unter « Nivellieren » soll hier die exakt horizontale Positionierung von Schienen oder Betonoberflächen verstanden werden.) Darauf wird der Hartbetonbelag zwischen den Sockelschienen eingebracht. Die genaue Nivellierung der Sockelschienen auf dem Rohbetonboden ist besonders schwierig, da für den Hubstapler nur geringe Toleranzen bezüglich der Horizontalposition der Sockelschienen zulässig sind. Wenn die Toleranzen nicht eingehalten werden, kann der Hubstapler besonders im oberen Ladebereich der Lagerhalle, z. B. in einer Höhe von 12-15 m, gegen das Lagergestell schlagen. Die Auslenkungen des oberen Hubstaplerendes können unter der Last des Lagergutes zu groß werden.

Besondere Schwierigkeiten bereitet bei dem bisherigen Verfahren auch das Verlegen des Hartbetonbelages, weil dieser erst eingebracht werden kann, nachdem die Sockelschienen verlegt sind. Die Sockelschienen bilden dabei selbst das Höhen- bzw. Dickenmaß für den Hartbetonbelag. Beim Egalisieren der Oberfläche des eingeschütteten Hartbetons z. B. mittels einer Egalisierlatte muß diese in den Randbereichen mit besonderem Geschick unterhalb des oberen Schenkels der Sockelschienen geführt werden. Die erforderliche, exakte Nivellierung bzw. Egalisierung des Hartbetonbelages ist ähnlich wie diejenige der Sockelschienen erschwert. Auch für den Hartbetonbelag werden besonders geringe Toleranzen bezüglich seines horizontalen Verlaufes gefordert. Bei Nicht-Einhaltung kann der Hubstapler Kippbewegungen unter der Last des Lagergutes ausführen und gegen die Lagergestelle schlagen.

Der Erfindung liegt die Aufgabe zugrunde, ein besonders in dieser Hinsicht verbessertes Verfahren und eine entsprechende Einrichtung zu schaffen.

Die Erfindung besteht darin, daß zunächst Meßschienen für den Hartbetonbelag von diesem entsprechender Höhe auf dem Rohbetonboden befestigt und nivelliert werden und daß darauf der Hartbetonbelag zwischen den Meßschienen eingebracht und auf die Höhe der Meßschienen nivelliert wird, worauf die Sockelschienen auf dem Hartbetonbelag befestigt und nivelliert werden.

Der Hartbetonbelag läßt sich vor dem Verlegen der Sockelschienen leichter anbringen und insbesondere exakt nivellieren und egalisieren. Dies gilt ganz besonders für die Randbereiche des Hartbetonbelages, weil auch in ihnen die Egalisierlatte unbehindert verwendet werden kann.

Durch die Meßschienen wird erzielt, daß beim Verlegen des Hartbetonbelages mit der Egalisierlatte unter voller Beobachtungsmöglichkeit über die Meßschienen gefahren werden kann. Da diese bereits nivelliert sind, kann leicht eine exakte Nivellierung des ganzen Hartbetonbelages erreicht werden.

Ferner wird erzielt, daß nach dem Abbinden des Hartbetonbelages die Meßschienen in ökonomischer Weise weggenommen und später wieder verwendet werden können.

Bei einem anderen bekannten Verfahren zur Herstellung einer Fahrstraße (DE-OS-2 746 249) ist zwar eine Seitenführungsplanke auf der Fahrbahnplatte benutzt. Diese hat aber nicht die Funktion, während des Betriebs Rollen eines Hubstaplers mit einem oberen Horizontalschenkel zu übergreifen und gegen Kippen zu sichern. Vielmehr liefert die bekannte Seitenführungsplanke eine Seitenabstützung für ein Leitflankenfahrzeug. Aus diesem Grund besitzt die Seitenführungsplanke auch keinen oberen Horizontalschenkel wie die Sockelschiene gemäß der Erfindung.

Die bekannte Seitenführungsplanke braucht infolge der ganz anderen Größenverhältnisse im Straßenbau auch nicht besonders exakt ausnivelliert zu werden, so daß zur Herstellung der Seitenführungsplanke bei diesem bekannten Verfahren verwendete Schalungsschienen nichts mit den Meßschienen der Erfindung gemeinsam haben.

Weitere Merkmale der Erfindung ergeben sich aus der folgenden Beschreibung von Ausführungsbeispielen in Verbindung mit der Zeichnung und den Ansprüchen.

Figur 1 bis 3 veranschaulichen zum Vergleich ein bisheriges Verfahren im Schnitt,

Figuren 4, 5, 5a zeigen zugehörige Details in zwei verschiedenen Verfahrensschriten, in größerem Maßstab bzw. eine perspektivische Darstellung in kleinerem Maßstab,

Figuren 6 bis 9 erläutern das erfindungsgemäße Verfahren in den Fig. 1 bis 3 entsprechenden Schnitten,

Figur 10 ist ein Schnitt durch ein zugehöriges Detail in größerem Maßstab,

Figur 11 eine zugehörige Draufsicht,

Figur 12 eine der Fig. 11 entsprechende Draufsicht in kleinerem Maßstab.

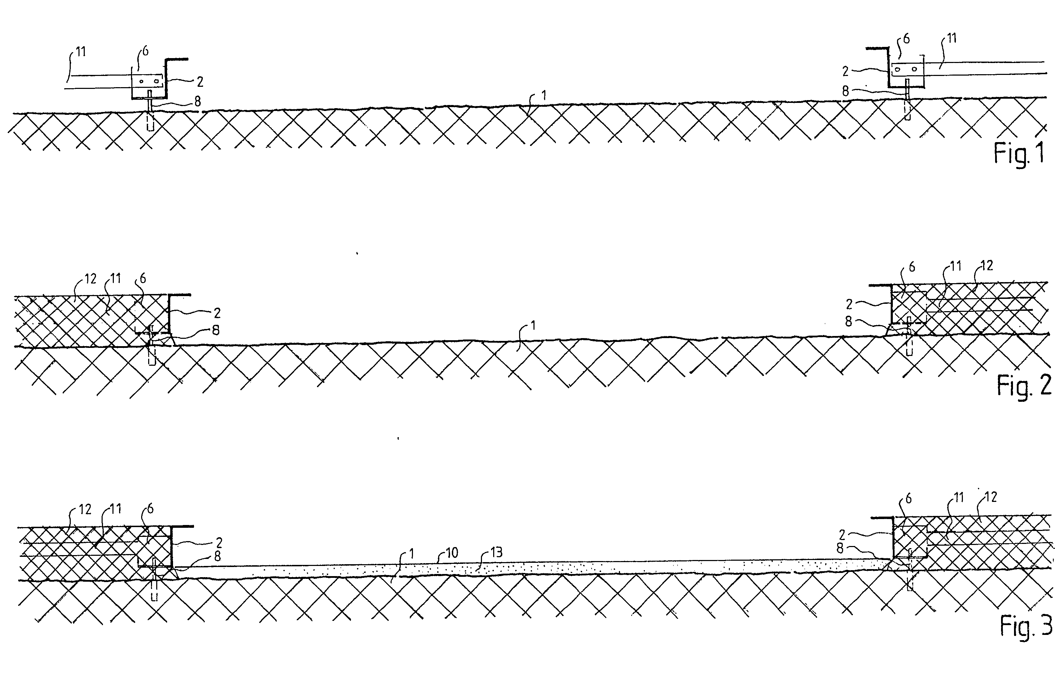

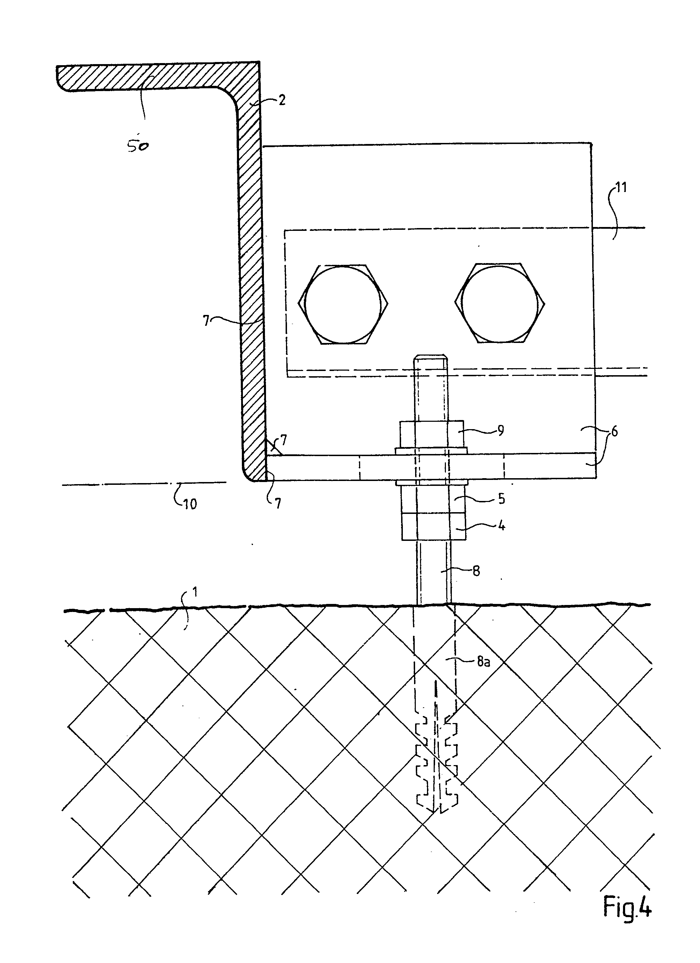

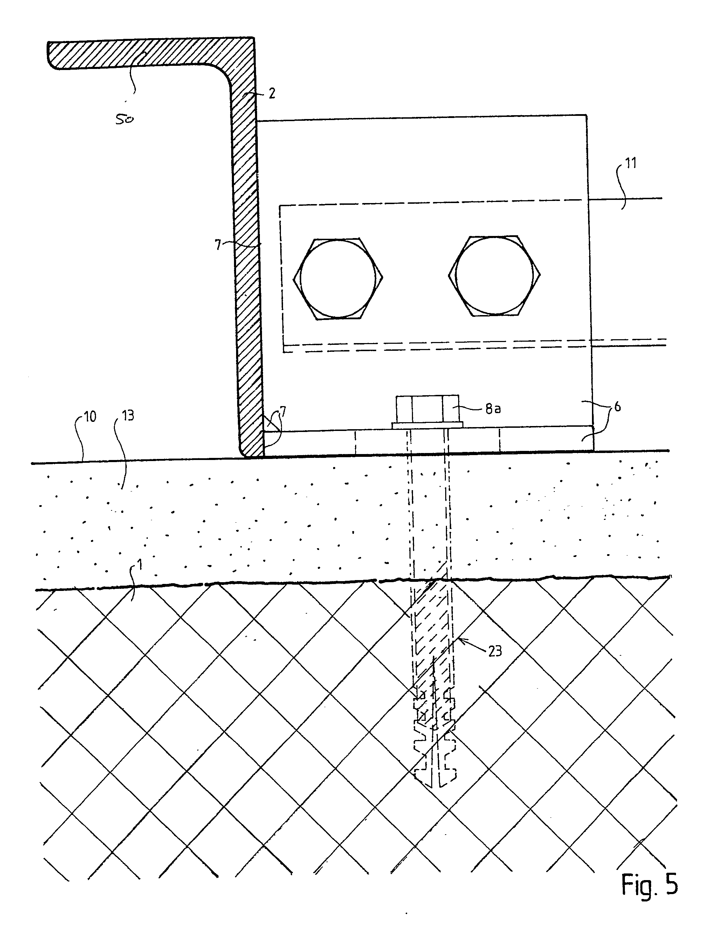

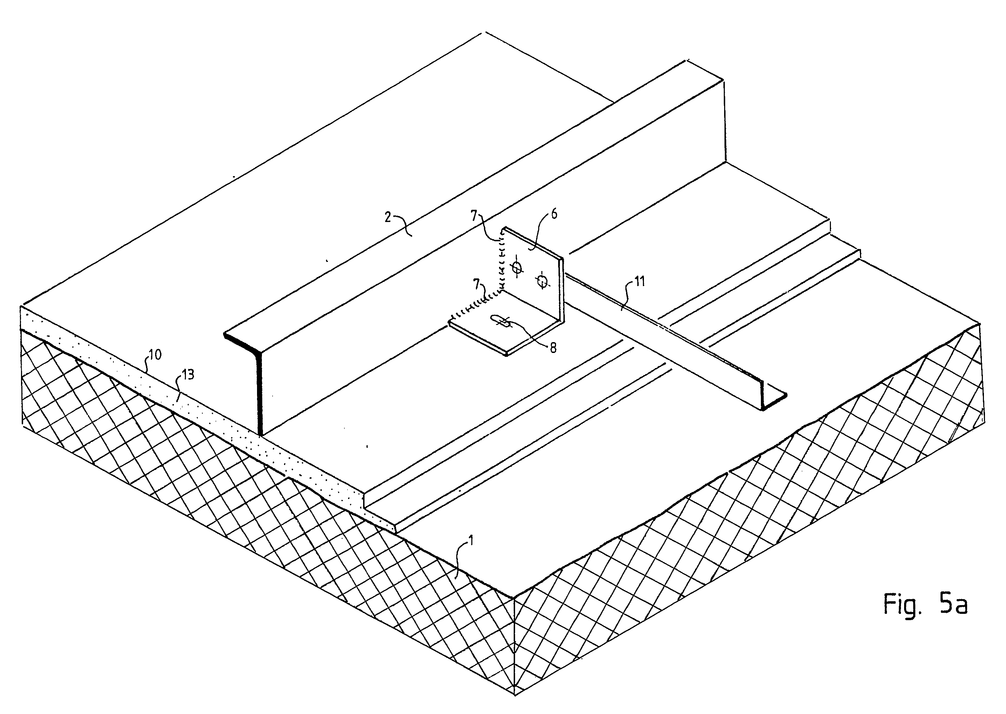

Bei dem bisherigen Verfahren nach Fig. 1 bis 5, 5a werden zunächst Schrauben 8 in dem Rohbetonboden 1 der nicht dargestellten Lagerhalle unter Verwendung von Dübeln 8a befestigt. Darauf werden Muttern 4, 5 in gewünschter Höhe aufgeschraubt und gegeneinander fixiert. Anschließend werden mit bei 7 angeschweißten, winkeligen Flanschen 6 versehene, Winkeleisen bildende Sockelschienen 2 auf die Schrauben 8 gelegt. Je zwei benachbarte Sockelschienen 2 werden miteinander durch an den Flanschen 6 angeschreubte Zugstangen 11 verbunden, durch die die Anpreßkraft des später einzubringenden Betons aufgenommen werden kann. Darauf werden Muttern 9 auf die Schrauben 8 geschraubt und dadurch die Sockelschienen 2 fixiert (Position nach Fig. 1).

Nunmehr wird im Bereich der Zugstangen 11 der Gestellsockelbeton 12 eingebracht, der sich unterhalb der in Fig. 1-3 nicht sichtbaren Lagergestelle befindet (Position nach Fig. 2). Anschließend wird der Hartbetonbelag 13 eingebracht.

Während des Betriebs kann ein Hubstapler auf der durch den Hartbetonbelag 13 gebildeten Rollbahn 10 fahren. Dabei greifen Führungsrollen des Hubstaplers unter die Sockelschienen 2, so daß der Hubstapler die exakte Vertikalposition während des Fahrens und insbesondere Hebens von Paletten innehält. Genaue Nivellierung der Sockelschienen 2 und Egalisierung des Hartbetonbelages 13 sind von besonderer Bedeutung. Die Nivellierung der Sockelschienen 2 wird durch die Verwendung der verschiedenen Schraubenteile 4, 5, 9 zusammen mit einer Wasserwaage erschwert. Die Egalisierung des Hartbetonbelages 13 ist besonders dadurch erschwert, daß man mit der Egalisierlatte in die Sockelschienen 2 hineinfahren, nämlich unten der oberen Schenkel 50 der Sockelschienen gelangen muß. Man kann nicht über ihnen hinwegfahren. Daher hat man nur beschränkte Beobachtungsmöglichkeit. Die Randbereiche des Belages 13 an den Sockelschienen werden daher häufig nicht exakt horizontal.

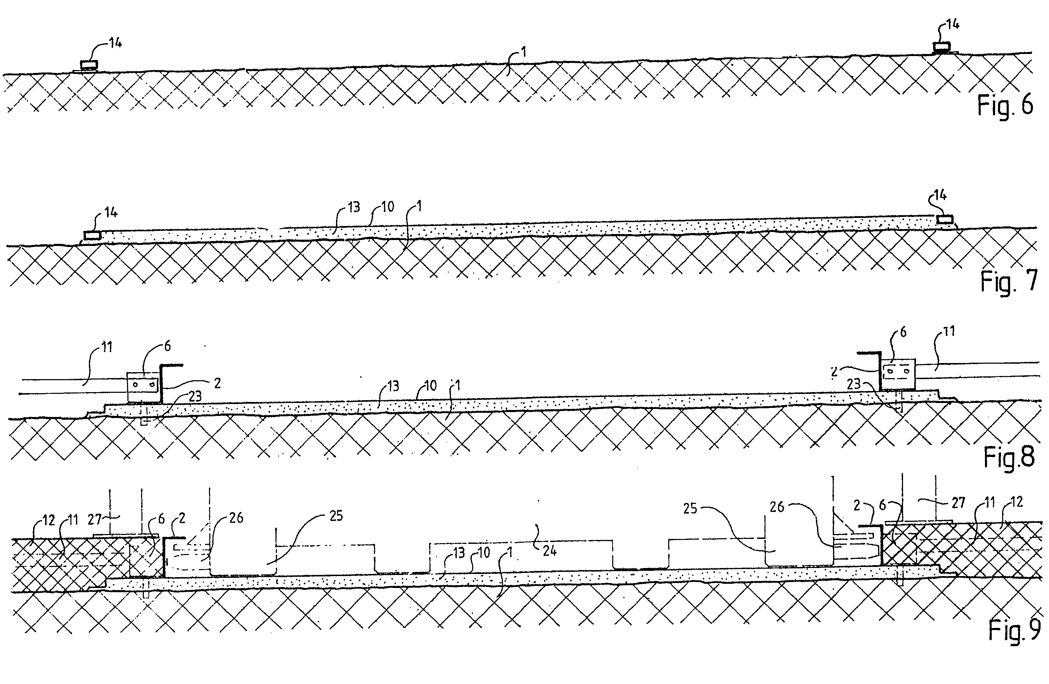

Beim Verfahren nach Fig. 6 bis 12 werden zunächst Dübelöcher 16 im Boden 1 angebracht und z. B. zwischen je zwei Löchern 16 werden Distanzplatten 15 in passender Zahl und Höhe aufgelegt. Nunmehr werden Meßschienen 14 von kastenförmigem Profil, durch welche die Höhe der Rollbahn 10 festgelegt wird, auf die Platten 15 gelegt. In den unteren Abschnitt 17 des Profils sind zwei Stellschrauben 18 eingeschraubt, die sich auf den Distanzplatten 15 mit ihren Spitzen 19 abstützen. Nach dem Nivellieren der Schienen 14 in exakte Horizontalposition, z. B. mittels eines Nivellierinstrumentes unter Verstellen der Schrauben 18, werden Schrauben 20 eingeschraubt, deren Köpfe 8 ebenfalls in dem Profil der Sockelschienen 2 versenkt sind. Nunmehr sind die Meßschienen 14 exakt fixiert (Position nach Fig. 6).

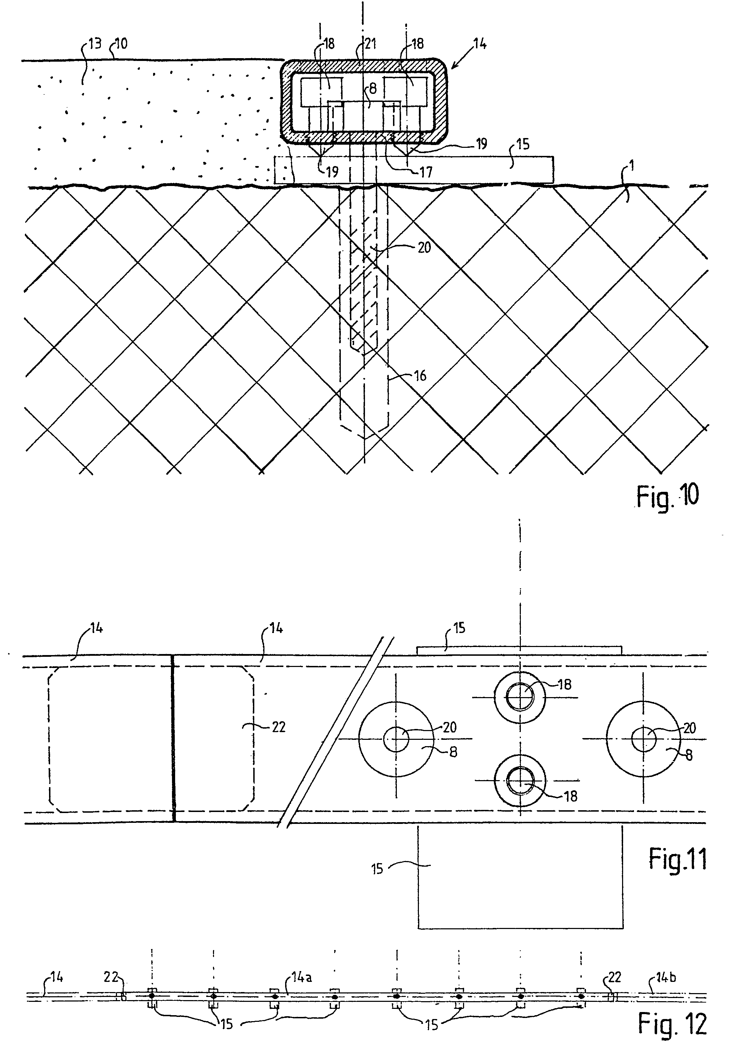

Anschließend wird der Hartbetonbelag 13 zwischen je zwei zusammengehörige Meßschienen 14 eingebracht und die Rollbahn 10 mittels einer Egalisierungslatte glatt gestrichen. Dies wird dadurch erleichtert, daß mit der Latte bei voller Beobachtungsmöglichkeit bei 21 über die Schienen 14 gefahren werden kann. Sie sind bereits nivelliert und schließen mit ihrem oberen Profilabschnitt 21 bündig mit der Rollbahn (Oberfläche 10) des Hartbetonbelages 13 ab. Der Abschnitt 21 bildet bei der Egalisierung das Maß der Höhe bzw. Dicke des entstehenden Hartbetonbelages 13 (Position nach Fig. 7, 10).

Darauf können die Schienen 14 und die Distanzplatten 15 weggenommen werden und anderweitig wieder verwendet werden. Nunmehr werden die Sockelschienen 2 auf dem Hartbetonbelag 13 z. B. mittels Schrauben oder Dübeln 23 befestigt. Diese können sofort angezogen werden, weil die Sockelschienen 2 nunmehr auf dem bereits nivellierten und egalisierten Hartbetonbelag 13 angebracht sind (Position nach Fig. 8).

Schließlich wird der Gestellsockelbeton 12 eingebracht (Position nach Fig. 9). In Fig. 9 ist auch der auf der Rollbahn 10 laufende Hubstapler 24 angedeutet, der auf der Bahn 10 laufende Rollen 25 und unter die Sockelschienen 2 greifende Führungsrollen 26 aufweist. Ferner ist das auf dem Boden 1 verankerte Lagergestell 27 angedeutet.

Wenn mehrere Meßschienen 14, 14a, 14b (Fig. 12) aneinanderstoßen, können diese durch einen Verbindungsflansch 22 gefluchtet werden, der in die Öffnung des kastenförmigen Profils der Schienen 14 paßt.

Die Meßschienen 14 können auch anderes als kastenförmiges Profil haben. Sie können gegebenenfalls auch zusammen mit den Teilen 15, 18, 20 belassen und vom Gestellsockelbeton 12 überdeckt werden. Die Meßschienen werden in der Regel am Rand des zu erstellenden Hartbetonbelages 13 angebracht, können aber eventuell auch in den mittleren Bereich des Belages 13 verlegt werden.

**Patentansprüche**

1. Verfahren zum Installieren von Sockelschienen (2) für einen Hubstapler (24) in einem Gestelle (27) für Lagergut enthaltenden Lagergebäude mit einem Rohbetonboden (1) und darauf angebrachtem Hartbetonbelag (13), welche Sockelschienen (2) Führungselemente, z. B. Rollen, (26) des Hubstaplers (24) mit einem oberen, im wesentlichen horizontalen Schenkel (50) übergreifen und gegen Kippen während der Arbeit sichern, dadurch gekennzeichnet, daß zunächst Meßschienen (14) für den Hartbetonbelag (13) von diesem entsprechender Höhe auf dem Rohbetonboden (1) befestigt und nivelliert werden und daß darauf der Hartbetonbelag (13) zwischen den Meßschienen (14) eingebracht und auf die Höhe der Meßschienen (14) nivelliert wird, worauf die Sockelschienen (2) auf dem Hartbetonbelag (13) befestigt und nivelliert werden.

2. Verfahren nach Anspruch 1, dadurch gekennzeichnet, daß die Meßschienen (14) nach Verlegen des Hartbetonbelages (13), vorzugsweise vor dem Verlegen der Sockelschienen (2), entfernt werden.

3. Einrichtung zur Durchführung des Verfahrens nach einem der Ansprüche 1, 2, gekennzeichnet durch mit dem oberen Abschnitt (21) bündig mit dem Hartbetonbelag (13) abschließende Meß-Schienen (14).

4. Einrichtung nach Anspruch 3, dadurch gekennzeichnet, daß die Meßschienen (14) kastenförmiges Profil aufweisen, in dessen unterem Abschnitt (17) versenkte Stellschrauben (18) zur Nivellierung und Abstützung der Meßschienen (2) angebracht sind.

5. Einrichtung nach den Ansprüchen 3 und 4, dadurch gekennzeichnet, daß in dem kastenförmigen Profil versenkte Befestigungsmittel (8, 20) zum Anbringen der Meßschienen (14) auf dem Rohbetonboden (1) untergebracht sind.

6. Einrichtung nach den Ansprüchen 3 bis 5, gekennzeichnet durch zwischen Meßschienen (14) und Rohbetonboden (1) angeordnete Distanzelemente (15) zur Abstützung der Stellschrauben (18).

7. Einrichtung nach den Ansprüchen 3 bis 6, dadurch gekennzeichnet, daß die Meßschienen (14) und gegebenenfalls die Distanzplatten (15) — nach dem Anbringen des Hartbetonbelages (13) — nach Lösen der Befestigungsmitel (20) von Rohbetonboden (1) wegnehmbar und wieder verwendbar sind.

## Claims

1. A method of installing plinth rails (2) for a fork-lift truck (24) in a storage building containing racks (27) for stored material, comprising a rough concrete floor (1) which a hard concrete surface (13) applied thereover, said rails (2) engaging over guide elements, e. g. rollers (26), of the fork-lift truck (24) by a top substantially horizontal limb (50) and securing the same against tipping during operation, characterised in that boundary rails (14) for the hard concrete surface (13), of a height corresponding thereto, are first fixed and levelled on the rough concrete floor (1) and then the hard concrete surface (13) is introduced between the boundary rails (14) and levelled to the height thereof, whereupon the plinth rails (2) are fixed on the hard concrete surface (13) and levelled.

2. A method according to claim 1, characterised in that the boundary rails (14) are removed after the hard concrete surface (13) has been applied and preferably before the plinth rails (2) are fitted.

3. Apparatus for performing the method according to claim 1 or 2, characterised by boundary rails (14) the top portion (21) of which lies flush with the hard concrete surface (13).

4. Apparatus according to claim 3, characterised in that the boundary rails (14) are of box section, the lower portion (17) thereof containing countersunk setscrews (18) for levelling and supporting the boundary rails (14).

5. Apparatus according to claims 3 and 4, characterised in that the box section contains countersunk fixing means (8, 20) for fitting the boundary rails (14) on the rough concrete floor (1).

6. Apparatus according to claims 3 to 5, characterised by spacer elements (15) disposed between the boundary rails (14) and the rough concrete floor (1) in order to support the setscrews (18).

7. Apparatus according to claims 3 to 6, characterised in that the boundary rails (14) are removable from the rough concrete floor (1) and reusable — after application of the hard concrete surface (13) — after the fixing means (20) have been released.

## Revendications

1. Procédé pour l'installation de rails (2) de socle pour un monte-charge empileur (24) dans un bâti (27) pour bâtiments de stockage contenant des produits à stocker, comprenant un sol de béton brut (1) et une couche de béton dur (13) disposée au-dessus, les rails de socle (2) recouvrant des éléments de guidage, par exemple des galets (26) du monte-charge empileur (24) avec une branche (50) supérieure sensiblement horizontale et empêchant le basculement pendant le travail, procédé caractérisé en ce que tout d'abord on fixe et on nivelle sur le sol de béton brut (1) des rails de mesure (14) pour la couche de béton dur (13) et d'une hauteur correspondant à celle-ci, et en ce qu'ensuite la couche de béton dur (13) est disposée entre les rails de mesure (14) et est nivelée à la hauteur des rails de mesure (14), les rails de socle (2) étant alors fixés et nivelés sur la couche de béton dur (13).

2. Procédé selon la revendication 1, caractérisé en ce que les rails de mesure (14) sont enlevés après placement de la couche de béton dur (13), et de préférence avant le placement des rails de socle (2).

3. Dispositif pour mettre en œuvre le procédé selon l'une des revendications 1, 2, caractérisé par des rails de mesure (14) dont la section supérieure (21) se termine de niveau avec la couche de béton dur (13).

4. Dispositif selon la revendication 3, caractérisé en ce que les rails de mesure (14) présentent un profil en forme de caisse dans la section inférieure (17) duquel des vis de réglage (18) enfoncées sont disposées pour le nivellement et pour supporter les rails de mesure (14).

5. Dispositif selon les revendication 3 et 4, caractérisé en ce qu'on dispose dans le profil en forme de caisse des moyens de fixation enfoncés (8, 20) pour monter les rails de mesure (14) sur le sol de béton brut (1).

6. Dispositif selon les revendications 3 à 5, caractérisé par des éléments entretoises (15) disposés entre les rails de mesure (14) et le sol de béton brut (1) pour supporter les vis de réglage (18).

7. Dispositif selon les revendications 3 à 6, caractérisé en ce que les rails de mesure (14) et éventuellement les plaques entretoises (15), après réalisation de la couche de béton dur (13), peuvent être enlevés du sol de béton brut (1) en étant à nouveau réutilisables, après desserrage des moyens de fixation (20).

Fig. 1

Fig. 2

Fig. 3

0 085 822

Fig.4

Fig. 5

Fig. 5a

0 085 822

Fig. 6

Fig. 7

Fig.8

Fig. 9

Fig. 10

Fig.11

Fig. 12

6